# EUROPÄISCHE PATENTSCHRIFT

(11) **EP 2 446 497 B1**
(45) Veröffentlichungstag und Bekanntmachung des Hinweises auf die Patenterteilung: **04.06.2014**
(21) Anmeldenummer: 10725195.1
(22) Anmeldetag: 21.06.2010
(51) Int. Cl.: B02C 19/00, B02C 23/04, B02C 23/18, B02C 23/36, C22B 1/248, C22B 7/00, H01M 6/52, H01M 10/54, C22B 26/12

(54) **Verfahren zur sicheren Zerkleinerung von Lithium-Ionen-Batterien**
Method for safely comminuting lithium-ion batteries
Procédé de désintégration sécurisée de batteries aux ions lithium

(30) Priorität: 25.06.2009 DE 102009027179
(43) Veröffentlichungstag der Anmeldung: 02.05.2012
(73) Patentinhaber: Samsung SDI Co., Ltd., Gyeonggi-do (KR); Robert Bosch GmbH, 70442 Stuttgart (DE)
(72) Erfinder: WOEHRLE, Thomas, 80807 Munich (DE); KERN, Rainer, 70174 Stuttgart (DE)
(74) Vertreter: Bee, Joachim
(86) Internationale Anmeldenummer: PCT/EP2010/058716
(87) Internationale Veröffentlichungsnummer: WO 2010/149611

(56) Entgegenhaltungen:
- EP-A1- 0 613 198
- EP-A1- 1 041 659
- WO-A1-02/23651
- US-A- 5 303 872

## Beschreibung

### Stand der Technik

Lithium-Ionen-Batterien und Lithium-Ionen-Polymer-Batterien werden derzeit nach Beendigung ihrer Betriebszeit (auch als EOL für ,end of life' bezeichnet) entsprechend bekannter Recycling-Prozesse entsorgt, wobei wertvolle Elemente wie beispielsweise Kobalt und Nickel wieder gewonnen werden können. Ein bekanntes Beispiel für ein Entsorgungs- und Recyclingkonzept von Lithium-Ionen-Batterien ist das Schmelzverfahren (VAL'ES*™*) der Firma Umicore. Bei diesem Verfahren werden im großtechnischen Maßstab Lithium-lonen- oder Lithium-Ionen-Polymer-Zellen beispielsweise von Handys oder Laptops der Entsorgung zugeführt und als Einzelzellen oder assemblierte Einheiten bei sehr hohen Temperaturen eingeschmolzen bzw. verbrannt.
Allerdings sind die bekannten Verfahren derzeit für das Recycling von Lithium-lonen-Systemen auf Lithium-Ionen-Zellen oder -Module ausgelegt, die aus dem Consumer-Markt kommen. Hierbei handelt es sich um kommerziell etablierte Produkte wie Lithium-Ionen-Wickel-Zellen im Hardcase oder im Softpack sowie Lithium-lonen-Stapelzellen im Softpack. Als Softpacks oder Pouch-Zellen werden Zelleinheiten bezeichnet, die mit einer Aluminium-Verbundfolie verpackt sind; auch die Bezeichnung Lithium-lonen-Polymer-Zellen wird dafür verwendet. Die nominalen Kapazitäten der zugrunde liegende Lithium-lonen- bzw. Lithium-Ionen-Polymer-Einzel-Zeilen, die heutzutage mit solchen Prozessen großtechnisch recycelt werden, liegen typischerweise zwischen 0,1Ah und 3 Ah.

Für Lithium-Ionen-Batterien, deren Applikation im Automobilbereich liegt, können diese beschriebenen Recycling-Verfahren derzeit nicht angewandt werden, da ihr Volumen, Gewicht und nominale Kapazitäten zu groß für die bestehenden Anlagenkonzepte sind. Nominale Kapazitäten von Lithium-Ionen-Einzel-Zellen für PKWs oder LKWs liegen im Bereich von 3 - 300Ah und typischerweise zwischen 4 und 80 Ah. Lithium-Ionen-Zellen, -Module oder -Batterien mit solch hohen nominalen Kapazitäten können mit den derzeitigen grosstechnischen Recycling-Konzepten nicht vernichtet und recycelt werden.

Ein weiterer Mangel ist die Tatsache, dass Lithium-Ionen-Batterien, insbesondere Lithium-Ionen-Batterien mit einer nominalen Kapazität von mindestens 3Ah, in einem undefinierten Zustand überhaupt nicht transportiert werden dürfen und somit einem dezentralen Recycling-System gar nicht ohne weiteres zugeführt werden können. Neben den fehlenden Rohstoffen, die dann nicht wiedergewonnen werden können, verbleibt zudem noch ein großes Sicherheitsrisiko auf dem Werksgelände des Zellherstellers, des Assemblierers oder auch in den Räumlichkeiten des Testers (insbesondere nach sogenannten Abuse-Tests im vollgeladenen Zustand, in der Regel grösser oder gleich 4,2V). Beispiele für relevante Batterietests sind so genannte Droptests, bei denen Zellen bei 4,25V Betriebsspannung eine Distanz von ca. 1,5m senkrecht herunter fallen oder gemäß dem so genannte Ofentest nach UL (Lagerung bei 130°C; 4.2V Betriebsspannung für 10 Minuten (UL 1642)). Selbst wenn die Zellen den Test gemäß Test-Vorschrift bestehen, zeigt sich in der Praxis jedoch, dass diese getesteten Zellen während einer anschließenden Lagerung, beispielsweise auf einem Werks- oder Testgelände, sich noch nach Tagen oder Wochen spontan entzünden können. Dies stellt ein sehr großes Gefährdungspotential dar.

US 5,303,872 A beschreibt ein Verfahren zum Zerkleinern von Batterien mit Hilfe von zwei Mahlrädern. Die Mahlräder sind dabei über einem Behälter mit einer neutralisierenden Flüssigkeit, welche Bindemittel enthält, angeordnet. Während des Zerkleinerns wird die neutralisierende Flüssigkeit auf die Mahlräder, und somit auf die zu zerkleinernden Batterien, gesprüht.

Weitere Verfahren zum Zerkleinern von Batterien sind aus EP 1 041 659 A1, EP 0 613 198 A1 oder auch WO 02/23651 A1 bekannt. Aus dem Stand der Technik ist es jedoch nicht bekannt, die mechanische Zerkleinerung der Batterien in Anwesenheit von Kalziumoxid, Kalziumchlorid und/oder Kalziumhydroxid durchzuführen.

Aufgabe der vorliegenden Erfindung ist es, einen verbesserten Prozess zur sicheren Zerkleinerung von Batterien bereitzustellen.

### Offenbarung der Erfindung

Die Aufgabe wird gelöst durch Bereitstellung eines Verfahrens zur sicheren Zerkleinerung von Batterien, umfassend die Schritte:
a) Bereitstellen einer oder mehrerer zu zerkleinernder Batterien; und
b) mechanische Zerkleinerung der bereitgestellten Batterien, wobei der Shredder-Prozess stattfindet in Anwesenheit von:
   i) mindestens einem Metallbrandschutzmittel, welches geeignet ist einen Brand der Batterien zu unterdrücken oder zu vermindern; und von
   ii) mindestens einem Bindemittel, welches geeignet ist Säuren und/oder Basen zu binden,
   wobei das mindestens eine Bindemittel Kalziumoxid, Kalziumchlorid und/oder Kalziumhydroxid umfasst oder daraus besteht.

Das erfindungsgemäße Verfahren erlaubt es Batterien, insbeondere höher kapazitive Lithium-Ionen-Batterien mit einer nominalen Kapazität von typischerweise größer 3Ah pro Zelle, sicher zu vernichten und die freigesetzten Energiemengen sowie gefährlichen Batterie- und auftretende Prozessstoffe kontrolliert und ohne Gefahr für Mensch und Umwelt zu binden und zu eliminieren.

Überraschenderweise zeigt sich, dass durch das erfindungsgemäße Verfahren Batterien, insbesondere Lithium-Ionen-Batterien mit nominalen Kapazitäten von mindestens 3Ah, gefahrlos und kontrolliert zerkleinert werden können. Anschließend können diese Bestandteile einem eigentlichen Recycling-Prozess zugeführt werden, z.B. dem VAL'ES™-Verfahren der Firma Umicore, da die Materialien nach dem erfindungsgemäßen Verfahren kompatibel zum eigentlichen großindustriellen Recycling-Prozess sind. Bei einem erindungsgemäßen mechanischen Zerkleinerungsprozess an hochkapazitiven Zellen, Modulen und Batterien wird erfindungsgemäß in Anwesenheit von bekannten Brandschutzmitteln das Batteriematerial mechanisch zerkleinert. Völlig unerwartet läuft die Vernichtung der Batterie auch im vollgeladenen Zustand moderat ab. Die Anwesenheit von Metallbrandschutzmitteln ermöglicht es, dass Brandstellen lokal abgedeckt werden und nicht noch in weiterem Maße andere Zellen der Gesamtbatterie oder umliegender Batterien in einen "Thermal Runaway" treiben. Das Bindemittel bindet entstandene Säure- und/oder Basenbestandteile, im Fall von Lithium-lonen-Batterien insbesondere von entstandener Flusssäure (HF) unter Entstehung von vorzugsweise Kalziumfluorit (CaF₂). Bei Lithium-Ionen-Batterien entsteht Flusssäure, die hoch toxische und korrosive Eigenschaften hat, durch Hydrolyse bzw. thermische Zersetzung des Leitsalzes Lithium-Hexa-Fluoro-Phosphat (LiPF₆). Die so zerkleinerten und behandelten Materialen können in einem Wasserbad, das durch die Anwesenheit von Bindemitteln, wie Kalziumhydroxid (Ca(OH)₂), leicht basisch ist, aufgefangen werden, um weitere Flusssäure (HF), die eventuell noch anwesend ist, unter Bildung von CaF₂ zu binden. Durch das wässrige Medium werden auch Reste an lithiiertem Graphit hydrolysiert; es entstehen Lithium-Salze wie Lithium-Hydroxid (LiOH). Die hydrolysierten Materialien können abgefiltert, luftgetrocknet und einem anschließenden Recyclingprozess zugeführt werden. Somit wird ein Verfahren bereitgestellt, mit welchem sich ggf. vor Ort hochkapazitive Lithium-Ionen-Batterien sicher zerkleinern und transportfähig machen lassen, um dann einer geeigneten, entfernt gelegenen, zentralen Recyclinganlage zugeführt zu werden.

In einem ersten Schritt werden eine oder mehrere Batterien bereit gestellt, die sicher zerkleinert werden sollen. Dabei können sowohl Batterien ausschließlich eines Typs, als auch Mischungen von Batterien unterschiedlicher Typen, Bauweisen und nominaler Kapazitäten gemeinsam zerkleinert werden. Einzelne, mehrere oder alle Batterien können sich dabei sowohl in voll geladenem, teilgeladenem und/oder ungeladenem Zustand befinden. Dabei können eine, mehrere oder alle Batterien intakt, in voll assemblierten Zustand, teilassembliert und/oder in undefiniertem Zustand befinden. Dabei umfasst ein undefinierter Zustand insbesondere solche Batteriezustände nach Umwelttests, Abuse- und/oder Missuse-Tests, havarierte Batterien und auch solche Batteriezustände, die bei Unfällen entstehen können.

Im erfindungsgemäßen Verfahren können grundsätzlich Batterien jeden Typs und jeder Bauart zerkleinert werden. Unter dem Begriff "Batterie" werden hier elektrochemische Energiespeicher verstanden, insbesondere Batterien oder Akkumulatoren aller gebräuchlichen Akkumulatortechnologien sein. Es können Batterien oder Akkumulatoren vom Typ Pb - Bleiakku, NiCd - Nickel-Cadmium-Akku, NiH2 - Nickel-Wasserstoff-Akkumulator, NiMH - Nickel-Metallhydrid-Akkumulator, Li-lon - Lithium-lonen-Akku, LiPo - Lithium-Polymer-Akku, LiFe - Lithium-Metall-Akku, Li-Mn - Lithium-Mangan-Akku, LiFePO₄ - Lithium-Eisen-Phosphat-Akkumulator, LiTi - Lithium-Titanat-Akku, RAM - Rechargeable Alkaline Manganese, Ni-Fe - Nickel-Eisen-Akku, Na/NiCl - Natrium-Nickelchlorid-Hochtemperaturbatterie, SCiB - Super Charge Ion Battery, Silber-Zink-Akku, Silikon-Akku, Vanadium-Redox-Akkumulator und/oder Zink-Brom-Akku verwendet werden. Insbesondere können Batterien vom Typ der Blei/Säure-, Nickel-Cadmium-, Nickel-Metallhydrid- und/oder Natrium/Natriumnickelchlorid-Batterie eingesetzt werden. Besonders bevorzugt werden Batterien vom Typ der Lithium-lonen-Batterie verwendet. Der Begriff "Batterie" wird dabei sowohl für einzelne Zellen, als auch für Module aus mehreren Zellen, als auch für komplexere Architekturen umfassend mehrere Zellen und/oder Module verwendet.

Bevorzugt werden hochkapazitive Batterien eingesetzt mit einer nominalen Kapazität von mindestens 3Ah. Besonders bevorzugt von 3Ah bis 300Ah, insbesondere von 4Ah bis 80Ah. Nominale Kapazitäten von Lithium-lonen-Einzel-Zellen für PKWs oder LKWs liegen im Bereich von 3 - 300Ah und typischerweise zwischen 4 und 80 Ah. Dabei können sich die angegebenen nominalen Kapazitätswerte entweder auf die ganze intakte Batterie beziehen oder auf eine einzelne Zelle einer Batterie.

Bevorzugt sind die bereitgestellten Batterien teilweise oder ausschliesslich Lithium-lonen- und/oder Lithium-Ionen-Polymer-Zellen, -Module und/oder - Batterien mit einer nominalen Kapazität von mindestens 3Ah pro Zelle.

Im erfindungsgemäßen Verfahren werden die bereitgestellten Batterien einer mechanischen Zerkleinerung unterzogen. Dies kann beispielsweise ein Shredderprozess sein. Dazu kann ein Shredder eingesetzt werden. Ein Shredder ist ein mechanisches Gerät zum Zerkleinern von unterschiedlichsten Materialien, für die Zwecke der Erfindung ist der Shredder so ausgelegt, dass er in der Lage ist ohne wesentliche Beeinträchtigung eine Mehrzahl von Batterien zu zerkleinern. Dem Prinzip des Schredderns liegt der Betrieb eines Mahlwerks zugrunde, welches beispielsweise durch entsprechend dimensionierte Elektro- oder Verbrennungsmotoren angetrieben werden kann. Das Mahlwerk kann beispielsweise aus einem durch versetzt angebrachte Walzen aufgebauten Getriebe bestehen. Wird eine Batterie in den Schredder gegeben, wird diese durch Zerreiben, Zermahlen, Zerreißen oder Zerschneiden in kleine Bestandteile aufgelöst. Dem Fachmann sind Shredder in verschiedensten Ausführungsformen, -größen und - dimensionen bekannt, sodass der Fachmann keine Schwierigkeiten hat für ausgewählte Batterien einen geeigneten Shredder zu wählen oder anzupassen.

Im erfindungsgemäßen Verfahren werden die bereitgestellten Batterien einer mechanischen Zerkleinerung unterzogen. Dies kann beispielsweise in einem Laserschneideprozess geschehen. Dazu kann ein Laserschneider bekannter Bauart eingesetzt werden, wie er bereits in vielen industriellen Anwendungen zum Schneiden von metallischen und/oder nichtmetallischen Werkstoffen Verwendung findet. Ein Laserschneider ist ein mechanisches Gerät zum Zerkleinern von unterschiedlichsten Materialien, für die Zwecke der Erfindung ist der Laserschneider so ausgelegt, dass er in der Lage ist ohne wesentliche Beeinträchtigung eine Mehrzahl von Batterien zu zerkleinern. Geeignete Laserschneideprozesse und Anordnungen sind dem Fachmannn bekannt und ohne Schwierigkeiten für das erfindungsgemäße Verfahren einsetzbar und/oder adaptierbar.

Im erfindungsgemäßen Verfahren werden die bereitgestellten Batterien einer mechanischen Zerkleinerung unterzogen. Dies kann beispielsweise ein Wasserschneideprozess sein. Dazu kann eine Wasserschneidemaschiene eingesetzt werden. Eine Wasserstrahlschneidemaschine ist eine Werkzeugmaschine die sich zum Trennen von Materialien eines Hochdruckwasserstrahles bedient. Dabei trennt der Hochdruckwasserstrahl das zu bearbeitende Material. Dieser Hochdruckwasserstrahl kann einen Druck von 6000 bar oder mehr aufweisen und es können Austrittsgeschwindigkeiten von ca. 1000 m/s oder mehr erreicht werden. Beim Reinwasserschneiden wird im Wesentlichen die Strahlenergie des Wassers ausgenutzt. Dies ermöglicht eine Schneidleistung bei der der Schnittspalt sehr eng sein und lediglich 0,1 mm betragen kann. Zur Strahlbündelung können Polymere zugesetzt werden. Zur Erhöhung der Schneidleistung kann dem Strahl ein Schneidmittel, ein sogenanntes Abrasiv, zugesetzt werden. Durch die Beimengung eines solchen Abrasivs (wie z. B. Granat, Aluminiumoxid oder Korund) ist es möglich, härtere Materialien noch effektiver zu trennen, die mit einem reinem Wasserstrahl nicht trennbar sind, oder deren Bearbeitung mit Purwasser nicht wirtschaftlich ist, bzw. wo eine höhere Schnittqualität verlangt wird. Um mit einem Abrasiv schneiden zu können, verfügt die Wasserstrahlanlage über einen Schneidkopf, der im wesentlichen aus drei Komponenten besteht: einer Reinwasserdüse, einer Abrasiv-Mischkammer und einer Abrasivfokussierdüse bzw. einem Fokussierrohr. Zuerst wird durch die Reinwasserdüse das hochkomprimierte Wasser zu einem Strahl bevorzugt von etwa 0,25-0,4 mm (düsenabhängig) geformt. Dieser Strahl schießt durch die Mischkammer mit einer hohen Geschwindigket, z.B. mit bis zu 1000 m/s, und erzeugt somit ein Vakuum im Schneidkopf. Durch eine kleine Öffnung im Schneidkopf kann jetzt Abrasivmittel in die Mischkammer gesaugt und mit dem Wasserstrahl vermischt werden. Das Wasser-Abrasiv-Gemisch wird dann fokussiert und tritt mit einem vorher festgelegten Durchmesser aus. Das Abrasivmittel kann auch CNC-gesteuert dosiert und dem Schneidkopf zugeführt werden, entweder mit Luft als Träger, oder in einer Emulsion.

Ein großer Vorteil bei der mechanischen Zerkleinerung mittels eines Wasserschneideprozesses besteht darin, dass sich das Schneidgut nicht nennenswert erwärmt. Auch ein Schneiden unter Wasser, etwa durch Erhöhung des Wasserspiegels im Strahlfänger und/oder durch Umgebung der Düse mit einer Wasserglocke, ist möglich.

Die erfindungsgemäße mechanischen Zerkleinerung mittels eines Wasserschneideprozesses erlaubt das Zerschneiden von allen Zell-Komoneneten in einem komplexen Lithium-Ionen-System. Beispielsweise 5 mm starkes Edelstahl, welches häufig als Aussen-Gehäuse der assemblierten Li-Ionen-Batterie eingesetzt wird kann damit zertrennt werden. Weitere Beispiele sind das Zertrennen anderer Bestandteile, insbesondere des Zell-Gehäuses, welches beispielsweise aus 2 mm starken Aluminiumblechen bestehen kann. Weiterhin können problemlos Elektroden und metallische Kollektorfolien getrennt werden; die Dicke von den gängigen Aluminium- und Kupfer-Kollektorfolien liegen in der Regel bei 8-20 µm, bevorzugt zwischen 10 und 15 µm.

Der Einsatz eines Wasserschneideprozesses hat weitere Vorteile. Die Temperatur der Batterie, insbesondere der Lithium-Ionen-Batterie wird durch den Schneidevorgang mittels Wasserstrahl nicht relevant erhöht. Das ist insbesondere bei einer Zerstörung von hochgeladenen Lithium-Ionen-Batterien vorteilhaft, weil keine weiteren Sekundärenergien auftreten, die die Batterie oder umliegende Batterien unkontrolliert weiter in ein thermisches Durchgehen treiben (im englischen als "thermal runaway" bezeichnet: darunter versteht man bei Lithium-Ionen-Akkumulatoren Vorgänge wie zum Beispiel lokal entstandene innere Kurzschlüsse, zum Beispiel Einsticke mit metallischen Gegenständen (z. Bsp. Skalpelle), die betroffene Stellen soweit aufheitzen, dass diese in Mitleidenschaft gezogen werden). In der Praxis beobachtet man dann eine Zerstörung des Separators und es kommt zur Erhöhung des Kurzschlussstromes und der Erwärmung und die Vorgänge schaukeln sich auf und die gespeicherte Energie wird schlagartig frei. Dabei kann es auch zu einer heftigen Explosion kommen. Ein weiterer Vorteil ist die Tatsache, dass Gefügeveränderungen an den Schnittkanten weitgehend ausgeschlossen werden. Dies ist sehr wichtig, wenn man in der Lithium-tonen-Zelle den Verbund aus positiver Elektrode, Separator und negativer Elektrode durchtrennt; etwaige Schnittgrade können hohe innere Kurzschlüsse und damit hohe Kurzschlussströme herbeiführen, die wiederum für die Batterie kritisch sein können und gerade in der Phase der Zerkleinerung Explosionen herbeiführen können. Auch das Wasser als trennendes Medium hat große Vorteile gegenüber den herkömmlichen auf Metall-Basis trennenden Werkstücken, weil es im Lithium-Ionen-Akkumulator keine inneren Kurzschlüsse verursacht. Gerade Metalle, die während dem Zerkleinern auf Lithium-lonen-Batterien einwirken, bewirken unkontrollierbare innere Kurzschlüsse, die zur starken Erwärmung oder sogar zu Explosionen führen können. Zudem sind diese Metalle während dem Zerstörungsvorgang ggf. stark ätzenden und korrosiven Säuren, wie beispielsweise Flusssäure (HF), ausgesetzt. Sollte dennoch während dem Wasserstrahlschneiden ein "Thermal Runaway" auftreten, findet eine in-sito Kühlung durch das umgebende Wasser statt.

Erfindungsgemäß findet der Zerkleinerungsprozess in Anwesenheit mindestens eines Metallbrandschutzmittels statt. Das Metallbrandschutzmittel ist dabei derart ausgewählt, dass es einen Brand der zu zerkleinernden Batterien vermeiden, unterdrücken, vermindern oder löschen kann. Dies kann beispielsweise dadurch geschehen, dass das Metallbrandschutzmittel dazu führt, dass die Menge an zur Verfügung stehendem Oxidationsmittel beeinflusst wird oder dass die entstandene Energie, insbesondere thermische Energie, vom Metallbrandschutzmittel absorbiert wird, bevor dadurch weitere Batterien oder Batteriebestandteile in den Brand miteinbezogen werden. Die Wahl der Metallbrandschutzmittels kann dabei von der Art und Zusammensetzung der zu zerkleinernden Batterien abhängen. Bevorzugt kann das mindestens eine Metallbrandschutzmittel Wasser, Natriumchlorid (NaCl) und/oder Quarzsand (SiO₂) umfassen oder daraus bestehen. Wird zur mechanischen Zerkleinerung der Batterien ein Wasserschneideprozess eingesetzt, so kann bereits das Wasser des Wasserschneiders gleichzeitig auch das Metallbrandschutzmittel im Sinne der Erfindung darstellen. Auch im Zerkleinerungsraum vorhandenes Wasser kann erfindungsgemäß als das mindestens eine Metallbrandschutzmittel dienen.

Im erfindungsgemäßen Verfahren findet der mechanische Zerkleinerungsprozess zusätzlich unter Anwesenheit mindestens eines Bindemittels statt, welches geeignet ist Säuren und/oder Basen zu binden. Je nach aufzuarbeitendem Batteriematerial werden bei der Zerkleinerung unterschiedliche Säuren und/oder Basen freigesetzt oder können als Reaktionsprodukt entstehen, wenn vorher getrennte Bestandteile der Batterien nun in Kontakt treten. Daher kann die Auswahl des oder der Bindemittel davon abhängen, welche Batterietypen zerkleinert werden sollen. Insbesondere bei der Aufbereitung von Lithium-Ionen-Batterien kann das Bindemittel basisch und geeignet sein Säuren, insbesondere Flusssäure, zu binden. Es können Bindemittel verwendet werden, die geeignet sind Fluor zu binden, sogenannte Fluor-Fänger. Geeignete Bindemittel oder Säureregulatoren sind dem Fachmann bekannt. Bevorzugt kann das mindestens eine Bindemittel Kalziumoxid (CaO), Kalziumchlorid (CaCl₂) und/oder Kalziumhydroxid (Ca(OH)₂) umfassen oder daraus bestehen.

Es können auch mehr als ein Bindemittel jeweils einzeln oder als Gemisch eingesetzt werden. Das Bindemittel, die Bindemittel oder das Bindemittelgemisch können jeweils unabhängig voneinander in fester, flüssiger und/oder gasförmiger Form eingesetzt werden.

Die Menge an Metallbrandschutzmittel und/oder Bindemittel, die bei einem erfindungsgemäßen mechanischen Zerkleinerungsprozess eingesetzt werden, hängen nicht nur von der Wahl des Metallbrandschutzmittels bzw. des Bindemittels ab, sondern könnnen von Volumen und Beschaffenheit des Zerkleinerungsraums und von der Menge, Gewicht, Kapazität, Art und Zusammensetzung der zu zerkleinernden Batterien mitbestimmt werden. So kann es notwendig sein, für einen bestimmungsgemäßen Betrieb einer bestimmten Vorrichtung zur Ausführung des erfindungsgemäßen Verfahrens in Abhängigkeit von Gewicht und Kapazität der zu zerkleinernden Batterien die erforderlichen Mengen und/oder Arten an Metallbrandschutzmittel und/oder Bindemittel zunächst in einem Testlauf zu bestimmen. Der Fachmann stößt bei dieser Bestimmung auf keine Schwierigkeiten, da ihm die Parameter und Möglichkeiten der Einflussnahme bekannt und für ihn ohne weiteres kontrollierbar sind. Die Bestimmung der erforderlichen Mengen an Metallbrandschutzmittel und Bindemittel liegen somit im Bereich von Routineexperimenten, die der Fachmann vor dem Hintergrund seines Fachwissens ohne weitere Anleitung selbständig ausführt.

Solide Metallbrandschutzmittel und/oder Bindemittel werden bevorzugt als feinkörniges, mindestens vorwiegend festes Material eingesetzt. Besonders bevorzugt als Material mit einem d₅₀-Wert von nicht mehr als 5µm, ganz besonders bevorzugt mit einem d₅₀-Wert von nicht mehr als 3µm. Enthält das Metallbrandschutzmittel NaCl und/oder Quarzsand, so wird das Material bevorzugt in einer Körnung mit einem d₅₀-Wert von 2µm +/- 0,5 eingesetzt. Enthält das Bindemittel Kalziumoxid und/oder Kaliumhydroxid, so wird das Mittel in einer Körnung mit einem d₅₀-Wert von 1µm +/-0,25 eingesetzt.

Es können auch flüssige Brandschutzmittel verwendet werden.

Um unerwünschte Reaktionen, insbesondere Oxidationen, soweit als möglich zu vermeiden, kann der Zerkleinerungsprozess ganz oder teilweise unter einer Atmosphäre mit einem Inertgas oder einem Inertgasgemisch durchgeführt werden, die, insbesondere mit Batteriebestandteilen, wenig reaktiv ist. Bevorzugt wird der mechanische Zerkleinerungsprozess ganz oder teilweise unter einer Atmosphäre mit einem Anteil an einem Inertgases oder einem Inertgasgemisch von mehr als 30% durchgeführt, bevorzugt mehr als 60%, besonders bevorzugt mehr als 90%. Dem Fachmann sind geeignete Inertgase oder Mischungen von Inertgasen bekannt. Bevorzugt kann die Inertgasatmosphäre Stickstoff (N₂) und/oder Argon (Ar) enthalten oder daraus bestehen.

Teile der Reaktionen, die beim Betrieb des erfindungsgemäßen Verfahrens ablaufen sind exotherm, so dass die Temperatur während des mechanischen Zerkleinerungsprozesses zunimmt. Daher kann es sinnvoll sein, den mechanischen Zerkleinerungsprozess ganz oder teilweise gekühlt ablaufen zu lassen. Dies kann beispielsweise dadurch erreicht werden, dass der Zerkleinerungsraum doppelwandig ausgestaltet ist und zwischen den beiden Wänden ein Kühlmedium vorhanden ist. Alternativ oder zusätzlich kann der Raum zur Ausführung des Zerkleinerungsprozesses ein Kühlmittel enthalten. Dieses kann beispielsweise vor und/oder während des Zerkleinerungsprozesses zugegeben werden. Beispielsweise können die Gase der Atmosphäre unter der der Shredderprozess abläuft gekühlt vorliegen oder fortlaufend gekühlt werden. Es ist aber auch möglich die zu zerkleinernden Batterien vorzukülen und dann erst nach Erreichen einer vorher festgelegten niedrigen Temperatur dem erfindungsgemäßen Verfahren zuzuführen. Alternativ können die zu zerkleinernden Batterien vor, nach und/oder während des Zerkleinerungsverfahrens mit Kühlmedium versetzt oder vermischt werden. Voraussetzung dafür ist, dass das verwendete Kühlmedium im Wesentlichen inert ist bzgl. der Batteriebestandteile und der Vorrichtung zur Ausführung des Verfahrens. Das Kühlmittel kann aus einer einzigen Substanz oder Verbindung bestehen oder eine Mischung von verschiedenen Substanzen oder Verbindungen aufweisen. Beispielsweise kann zur Kühlung Wasser, flüssiger Stickstoff und/oder Trockeneis eingesetzt werden.

Um eine besonders vorteilhafte Umgebund für den mechanischen Zerkleinerungsprozess zu schaffen, kann der Zerkleinerungsprozess ganz oder teilweise unter Wasser durchgeführt werden. Dies hat den Vorteil, dass das Wasser sowohl als Medium mit nicht unerheblicher eigener Wärmekapazität (und damit als das mindestens eine Metallbrandschutzmittel im Sinne der Erfindung), sowie als Wärmeleiter zu einem weiteren Kühlmedium fungieren kann, als auch als Lösungsmittel für das mindestens eine Bindemittel und gegebenenfalls für weitere Metallbrandschutzmittel. Dadurch wird die Bereitstellung von kontrollierten Reaktionsbedingungen an möglichst vielen Oberflächen der zu zerkleinernden bzw. der bereits ganz oder teilweise zerkleinerten Batterien erleichtert, da das Metallbrandschutzmittel und das Bindemittel in genau definierten Konzentrationen gelöst und gleichmäßig verteilt im Zerkleinerungsraum vorliegen. In dem wässrigen Millieu wird, im Fall von Lithium-Ionen-Batterien, lithiiertes Graphit hydrolysiert. Es entstehen dabei Lithiumsalze wie beispielsweise Lithium-Hydroxid (LiOH).

Das erfindungsgemäße Verfahren kann weitere Schritte aufweisen, die sich an den mechanischen Zerkleinerungsprozess anschließen.

In einem ersten weiteren Schritt werden die zerkleinerten Materialien in ein Wasserbad überführt bzw. darin aufgefangen. Dieses Wasserbad enthält ein Bindemittel, welches dieselben Eigenschaften aufweisen kann, wie das Bindemittel welches während des mechanischen Zerkleinerungsprozesses zum Einsatz kommt. Dabei muss in einer Ausführungsform des Verfahrens während des Zerkleinerungsprozesses und im anschließenden Wasserbad nicht das gleiche Bindemittel verwendet werden. Es können in beiden Schritten unterschiedliche Bindemittel eingesetzt werden. Bevorzugte Bindemittel sind bereits oben für den mechanischen Zerkleinerungsprozess beschrieben.

An das Wasserbad kann sich ein weiterer zusätzlicher Verfahrensschritt anschließen. In diesem zweiten zusätzlichen Schritt wird der gegebenenfalls hydrolysierte Austrag des mechanischen Zerkleinerungsprozesses abfiltirert. Sinn und Zweck dieses Schrittes ist es, die unlöslichen Bestandteile des Austrags des Zerkleinerungsprozesses von den flüssigen Bestandteilen zu trennen. Gegebenfalls können diese Fraktionen dann einzeln weiteren Verwertungsschritten und/oder einem Recyclingprozess zugeführt werden. Geeignete Filterlösungen sind dem Fachmann bekannt. Gegebenfalls kann das Filtrat anschließend getrocknet werden. Dieser Trocknungsschritt reduziert z.B. das Gewicht des Filtrats, was insbesondere dann von Vorteil ist, wenn das Filtrat gelagert und/oder über längere Strecken transportiert werden muss, bevor es einer weiteren Verwertung zugeführt wird.

Die vorliegende Erfindung bezieht sich auch auf ein Verfahren zum Recycling von Batterien, bevorzugt von Lithium-Ionen-Batterien mit einer nominalen Kapazität von mindestens 3Ah. Bei diesem Verfahren werden die Batterien zunächst nach einem oben beschriebenen erfindungsgemäßen Verfahren zerkleinert und anschließend einem Recycling-Prozess zugeführt. Unter einem Recycling-Prozess oder Recyclingverfahren wird dabei ein Prozess oder Verfahren verstanden, bei dem mindestens ein Rohstoff, der in den zerkleinerten Batterien enthalten ist isoliert und einer weiteren Verwendung zugeführt wird. Ein Beispiel für einen solchen Recycling-Prozess ist das VAL'ES™-Verfahren der Firma Umicore, welches in der Patentschrift EP1 589 121 B1 beschreiben ist. Andere alternative oder zusätzliche Recycling-Prozesse sind dem Fachmann bekannt.

Eine mögliche Vorrichtung zur Ausführung eines erfindungsgemäßen Verfahrens zur sicheren Zerkleinerung von Batterien wird nun beschrieben. Dazu weist die Vorrichtung Mittel auf zur Durchführung des erfindungsgemäßen Zerkleinerungsverfahrens. Das offenbarte erfindungsgemäße Verfahren lässt sich durch dem Fachmann bekannte Mittel umsetzen. Erfolgt die mechanische Zerkleinerung mindestens teilweise durch einen Shredderprozess, so kann als Basis ein Shredder nach bekannter Bauart dienen. Erfolgt die mechanische Zerkleinerung mindestens teilweise durch einen Laserschneideprozess, so kann als Basis ein Laserschneider bekannter Bauart eingesetzt werden. Erfolgt die mechanische Zerkleinerung mindestens teilweise durch einen Wasserschneideprozess, so kann ein Wasserschneider nach bekannter Bauart als Basis dienen. Mittel zur Zu- und Ableitung des Metallbrandschutzmittels bzw. des Bindemittels sowie geeignete Ausgestaltungen des Zerkleinerungsraums sind entweder bekannt oder liegen im Bereich von Routinetätigkeiten des verfahrenstechnisch bzw. maschinenbaulich vorgebildeten Fachmanns.

Zur Steuerung des erfindungsgemäßen Verfahrens kann die Vorrichtung eine sogenannten CNC-Steuerung (CNC steht für Computerized Numerical Control) aufweisen. Es ist möglich, die CNC-Steuerung der Vorrichtung mit einem konstruktiven CAD-Programm (CAD steht für Computer Aided Design) des jeweiligen Lithium-Ionen-Systems zu korrelieren, um besonders unkritisch eine Zerkleinerung zu erreichen und dementsprechend an unkritischen Positionen im Pack anzusetzen. CNC-Steuerungen sind sehr präzise und insbesondere in einer Serienproduktion ist es nicht nötig viel Personal an der Anlage selbst einzusetzen. Dies minimiert die Gefährdung des Menschen und erhöht die Akzeptanz solcher Anlagen für die sehr gefährlichen Lithium-Ionen-Batterie-Zerkleinerungsvorgänge.

## Patentansprüche

1. Verfahren zur sicheren Zerkleinerung von Batterien, umfassend die Schritte:
a) Bereitstellen einer oder mehrerer zu zerkleinernder Batterien; und
b) mechanische Zerkleinerung der bereitgestellten Batterien, wobei der Zerkleinerungsprozess stattfindet in Anwesenheit von:
i) mindestens einem Metallbrandschutzmittel, welches geeignet ist einen Brand der Batterien zu unterdrücken oder zu vermindern; und von
ii) mindestens einem Bindemittel, welches geeignet ist Säuren und/oder Basen zu binden,
**dadurch gekennzeichnet, dass** das mindestens eine Bindemittel Kalziumoxid, Kalziumchlorid und/oder Kalziumhydroxid umfasst oder daraus besteht.

2. Verfahren nach Anspruch 1, **dadurch gekennzeichnet, dass** die bereitgestellten Batterien teilweise oder ausschliesslich Lithium-lonen- und/oder LithiumIonen-Polymer-Zellen, -Module und/oder -Batterien mit einer nominalen Kapazität von mindestens 3Ah pro Zelle umfassen.

3. Verfahren nach einem der vorhergehenden Ansprüche, **dadurch gekennzeichnet, dass** das mindestens eine Metallbrandschutzmittel Wasser, Natriumchlorid und/oder Quarzsand umfasst oder daraus besteht.

4. Verfahren nach einem der vorhergehenden Ansprüche, **dadurch gekennzeichnet, dass** der Zerkleinerungsprozess teilweise oder ganz unter einer Atmosphäre mit einem Anteil an einem Inertgas oder einem Inertgasgemisch von mehr als 30% durchgeführt wird, bevorzugt mehr als 60%, besonders bevorzugt mehr als 90%.

5. Verfahren nach Anspruch 4, **dadurch gekennzeichnet, dass** die Inertgasatmosphäre Stickstoff und/oder Argon umfasst oder daraus besteht.

6. Verfahren nach einem der vorhergehenden Ansprüche, **dadurch gekennzeichnet, dass** der Zerkleinerungsprozess teilweise oder ganz gekühlt durchgeführt wird.

7. Verfahren nach Anspruch 6, **dadurch gekennzeichnet, dass** zur Kühlung Wasser, flüssiger Stickstoff und/oder Trockeneis eingesetzt wird.

8. Verfahren nach einem der vorhergehenden Ansprüche, **dadurch gekennzeichnet, dass** der Zerkleinerungsprozess ganz oder teilweise unter Wasser durchgeführt wird.

9. Verfahren nach einem der vorhergehenden Ansprüche, umfassend den zusätzlichen Schritt
c) Auffangen der zerkleinerten Materialien in einem Wasserbad enthaltend mindestens ein Bindemittel, welches geeignet ist Säuren und/oder Basen zu binden.

10. Verfahren nach Anspruch 9, umfassend die zusätzlichen Schritte
d) Abfilterung des Austrags des Zerkleinerungsprozesses; und
e) gegebenenfalls Trocknung des Filtrats.

11. Verfahren nach einem der vorhergehenden Ansprüche, **dadurch gekennzeichnet, dass** bei der mechanischen Zerkleinerung ein Wasserschneideprozess, ein Laserschneideprozess und/oder ein Shredderprozess zum Einsatz kommt.

12. Verfahren zum Recycling von Batterien, bevorzugt von Lithium-Ionen- und/oder Lithium-Ionen-Polymer-Zellen, -Module und/oder -Batterien, umfassend die Schritte:
- Zerkleinerung der Batterien nach einem der Verfahren gemäß einem der Ansprüche 1 bis 11; und
- Zuführung der zerkleinerten Batterien zu einem Recycling-Prozess.

## Claims

1. Process for the safe comminution of batteries, which comprises the steps:
a) provision of one or more batteries to be comminuted; and
b) mechanical comminution of the batteries provided, where the comminution process takes place in the presence of:
i) at least one metal fire retardant which is able to suppress or reduce burning of the batteries; and of
ii) at least one binder which is suitable for binding acids and/or bases,
**characterized in that** the at least one binder comprises or consists of calcium oxide, calcium chloride and/or calcium hydroxide.

2. Process according to Claim 1, **characterized in that** the batteries provided partly comprise or consist exclusively of lithium ion cells, modules and/or batteries and/or lithium ion polymer cells, modules and/or batteries having a nominal capacity of at least 3 Ah per cell.

3. Process according to either of the preceding claims, **characterized in that** the at least one metal fire retardant comprises or consists of water, sodium chloride and/or silica sand.

4. Process according to any of the preceding claims, **characterized in that** the comminution process is partly or entirely carried out under an atmosphere having a proportion of an inert gas or an inert gas mixture of more than 30%, preferably more than 60%, particularly preferably more than 90%.

5. Process according to Claim 4, **characterized in that** the inert gas atmosphere comprises or consists of nitrogen and/or argon.

6. Process according to any of the preceding claims, **characterized in that** cooling is carried out during part or all of the comminution process.

7. Process according to Claim 6, **characterized in that** water, liquid nitrogen and/or dry ice is used for cooling.

8. Process according to any of the preceding claims, **characterized in that** all or part of the comminution process is carried out under water.

9. Process according to any of the preceding claims, which comprises the additional step c) collection of the comminuted material in a water bath containing at least one binder which is suitable for binding acids and/or bases.

10. Process according to Claim 9, which comprises the additional steps
d) filtering-off of the output from the comminution process; and
e) optionally drying of the filtrate.

11. Process according to any of the preceding claims, **characterized in that** a water cutting process, a laser cutting process and/or a shredder process is used in the mechanical comminution.

12. Process for recycling batteries, preferably lithium ion cells, modules and/or batteries and/or lithium ion polymer cells, modules and/or batteries, which comprises the steps:
- comminution of the batteries by one of the processes according to any of Claims 1 to 11; and
- supply of the comminuted batteries to a recycling process.

## Revendications

1. Procédé de déchiquetage sécurisé de batteries comprenant les étapes qui consistent à :
a) préparer une ou plusieurs batteries à déchiqueter et
b) déchiqueter mécaniquement les batteries préparées, l'opération de déchiquetage ayant lieu en présence de :
i) au moins un moyen de protection contre la combustion des métaux qui permet d'empêcher ou de diminuer la combustion des batteries et
ii) au moins un liant qui permet de lier les acides et/ou les bases,
**caractérisé en ce que**
le ou les liants comprennent de l'oxyde de calcium, du chlorure de calcium et/ou de l'hydroxyde de calcium ou en sont constitués.

2. Procédé selon la revendication 1, **caractérisé en ce que** les batteries préparées comprennent en partie ou exclusivement des cellules, des modules et/ou des batteries à ions lithium et/ou à polymère et ions lithium dont la capacité nominale est d'au moins 3 Ah par cellule.

3. Procédé selon l'une des revendications précédentes, **caractérisé en ce que** le ou les moyens de protection contre la combustion des métaux comprennent de l'eau, du chlorure de sodium et/ou du sable de quartz ou en sont constitués.

4. Procédé selon l'une des revendications précédentes, **caractérisé en ce que** l'opération de déchiquetage s'effectue en partie ou en totalité sous une atmosphère dont la teneur en gaz inerte ou en un mélange de gaz inerte est supérieure à 30 %, de préférence supérieure à 60 % et de façon particulièrement préférable supérieure à 90 %.

5. Procédé selon la revendication 4, **caractérisé en ce que** l'atmosphère de gaz inerte comprend de l'azote et/ou de l'argon ou en est constituée.

6. Procédé selon l'une des revendications précédentes, **caractérisé en ce que** l'opération de déchiquetage est réalisée en tout ou en partie sous refroidissement.

7. Procédé selon la revendication 6, **caractérisé en ce que** de l'eau, de l'azote liquide et/ou de la glace sèche sont utilisés pour le refroidissement.

8. Procédé selon l'une des revendications précédentes, **caractérisé en ce que** l'opération de déchiquetage est réalisée en tout ou en partie sous eau.

9. Procédé selon l'une des revendications précédentes, comprenant l'étape supplémentaire qui consiste à :
c) reprendre les matériaux déchiquetés dans un bain d'eau qui contient au moins un liant qui convient pour lier les acides et/ou les bases.

10. Procédé selon la revendication 9, comprenant les étapes supplémentaires qui consistent à :
d) filtrer la sortie de l'opération de déchiquetage et
e) éventuellement sécher le filtrat.

11. Procédé selon l'une des revendications précédentes, **caractérisé en ce que** le déchiquetage mécanique utilise une opération de découpe à l'eau, une opération de découpe au laser et/ou une opération de fractionnement.

12. Procédé de recyclage de batteries, de préférence de cellules, de modules et/ou de batteries à ions lithium et/ou à polymère et ions lithium, le procédé comportant les étapes qui consistent à :
déchiqueter des batteries selon le procédé selon l'une des revendications 1 à 11 et
amener les batteries déchiquetées à une opération de recyclage.
